# DEMANDE DE BREVET EUROPEEN

(11) **EP 4 258 168 A1**
(43) Date de publication de la demande: **11.10.2023**
(21) Numéro de dépôt: 23166741.1
(22) Date de dépôt: 05.04.2023
(51) Int. Cl.: G06K 19/077, G06K 19/02

(54) **DISPOSITIF DE TRAÇABILITÉ**

(30) Priorité: 06.04.2022 FR 2203166
(71) Demandeur: Grosfilley, Elodie, 01580 Matafelon-Granges (FR)
(72) Inventeur: Grosfilley, Elodie, 01580 Matafelon-Granges (FR)
(74) Mandataire: Germain Maureau

(57) **Abrégé**

Le dispositif (100) de traçabilité d'un produit (1000) en bois ou en aggloméré comprend : un marqueur (103) de radio-identification ; une coque (101) en une matière plastique rigide ; une masse (104) en élastomère assurant une protection spatiale omnidirectionnelle du marqueur (103) de radio-identification, la masse (104) en élastomère étant solidaire de la coque (101) ; des parties (102) d'accrochage pour assurer une fixation du dispositif (100) de traçabilité sur le produit (1000) à tracer par pénétration des parties (102) d'accrochage en force dans le produit (1000) à tracer. Les parties (102) d'accrochage sont solidaires de la coque (101). Les parties (102) d'accrochage sont formées en un matériau présentant une résistance mécanique strictement supérieure à la résistance mécanique de la matière de la coque (101).

## Description

### Domaine technique de l'invention

Le domaine technique de la présente invention est celui de la traçabilité d'un produit, notamment en bois ou en aggloméré. Plus particulièrement, l'invention est relative à un dispositif de traçabilité du produit.

### Etat de la technique antérieure

Dans le métier du bois, une problématique connue consiste à tracer le parcours de grumes depuis une parcelle en forêt jusqu'à une scierie. Pour une grume issue de l'abattage d'un arbre, les différents acteurs concernés entre la parcelle et la scierie peuvent être :
- le propriétaire de la parcelle ou est abattu l'arbre formant la grume ;
- le bucheron qui abat l'arbre ;
- le débardeur qui transporte la grume jusqu'à un lieu de chargement ;
- le transporteur qui transporte la grume jusqu'à la scierie ;
- la scierie qui va sectionner de manière idoine la grume ;
- la scierie lors de la livraison de lots de bois sciés issus de la grume ;
- le client de la scierie qui achète les lots de bois.

Afin de tracer le parcours, il est connu d'utiliser un marqueur simple sur lequel un ou plusieurs renseignements visuels sont inscrits, par exemple au laser. Le marqueur peut se présenter sous la forme d'un rectangle en matière plastique d'une épaisseur de 1 mm. Le marqueur peut être de différentes couleurs pour ajouter un renseignement complémentaire aux renseignements visuels inscrits. La matière utilisée pour fabriquer le marqueur est un polycarbonate injecté, réputé pour sa résistance mécanique dans le domaine technique des matières plastiques injectées. L'utilisation de ce type de marqueur se limite aux essences de bois considérées comme tendre tels que les résineux (comme par exemple l'épicéa, le douglas, le pin) car il peut être difficile à fixer sur des bois plus durs.

Il est aussi connu de l'état de la technique antérieure la demande de brevet français publiée sous le numéro FR 3 005 768 A1 qui propose un dispositif de traçabilité d'un produit, ce dispositif de traçabilité comprenant une coque obtenue par moulage et un ensemble électronique. L'ensemble électronique comprend une puce électronique de type RFID (pour « Radio Frequency Identification » en langue anglaise) pour identifier le produit et une antenne. L'ensemble électronique est disposé dans la coque. La coque est munie d'une paroi latérale conformée pour être enfoncée dans le produit à tracer. Ce dispositif de traçabilité est avantageux dans le sens où, lors de son utilisation, le produit dans lequel la paroi latérale est enfoncée peut être identifié de manière aisée tout au long du parcours à l'aide d'un lecteur RFID configuré pour lire à distance le contenu d'une mémoire la puce électronique afin d'identifier le produit. Ce dispositif de traçabilité convient particulièrement pour un produit en essence de bois tendre, en effet la paroi latérale est susceptible de s'endommager si l'essence de bois est trop dure comme cela est notamment le cas des bois issus des forêts tropicales et équatoriales (par exemple l'acajou, le dibétou, l'ipé, le padouk, le cumarus) et les bois agglomérés.

Dès lors, il existe un besoin de trouver une solution pour rendre plus robuste le dispositif de traçabilité afin de l'utiliser pour différents types de produits, notamment de différentes duretés.

Il est aussi connu de combiner un marquage visuel, par exemple obtenu par laser, et la présence de l'ensemble électronique au sein d'un même dispositif de traçabilité. Par exemple, le ou les renseignements marqués visuellement, par exemple sous la forme d'un numéro ou QR code ou code-barres, peuvent être associés à l'identifiant unique encodé dans la puce électronique de l'ensemble électronique en vue d'être ultérieurement lus par un lecteur RFID. Ceci permet de lire le dispositif de traçabilité soit visuellement, soit par ondes radiofréquences, ce qui est particulièrement adapté dans la filière bois où, à certains moments, seules des lectures visuelles peuvent être réalisées, offrant la possibilité au final d'une lecture en mode dégradé.

### Objet de l'invention

L'invention a pour objet d'améliorer la résistance d'un dispositif de traçabilité afin de le rendre compatible avec une plus large gamme de produits à tracer auxquels il peut être fixé de manière robuste.

A cet effet, l'invention est relative à un dispositif de traçabilité d'un produit en bois ou en aggloméré, le dispositif de traçabilité comprenant : un marqueur de radio-identification ; une coque en une matière plastique rigide ; une masse en élastomère assurant une protection spatiale omnidirectionnelle du marqueur de radio-identification, la masse en élastomère étant solidaire de la coque ; des parties d'accrochage pour assurer une fixation du dispositif de traçabilité sur le produit à tracer par pénétration des parties d'accrochage en force dans le produit à tracer, les parties d'accrochage étant solidaires de la coque, les parties d'accrochage étant formées en un matériau présentant une résistance mécanique strictement supérieure à la résistance mécanique de la matière de la coque.

Ce dispositif de traçabilité présente l'avantage d'identifier de manière sûre le produit à tracer sur lequel il est fixé puisqu'un identifiant numérique unique est inscrit dans chaque marqueur de radio-identification qui pourra être lu à distance, et notamment sans contact, de manière fiable à l'aide d'un lecteur de radio-identification. Un autre avantage de ce dispositif de traçabilité est que les parties d'accrochage sont adaptées pour pénétrer en force dans le produit à tracer notamment du fait que leur résistance mécanique sera plus importante que celle de la coque ; il est donc par exemple possible de fixer le dispositif de traçabilité sur des produits à tracer de type grumes à bois tendre ou à bois dur de manière satisfaisante.

Le dispositif de traçabilité peut comprendre en outre une ou plusieurs des caractéristiques listées ci-après.

Selon une caractéristique, le dispositif de traçabilité comprend des moyens d'encliquetage incluant des doigts aptes à se positionner dans une gorge d'un marteau de pose destiné à être utilisé pour fixer le dispositif de traçabilité sur le produit à tracer.

Ainsi, le dispositif de traçabilité peut être monté de manière temporaire sur le marteau de pose afin de faciliter la fixation du dispositif de traçabilité : un coup de marteau sur le produit à tracer avec interposition du dispositif de traçabilité permet d'enfoncer les parties d'accrochage en force dans le produit à tracer, ce qui s'accompagne ensuite d'un éloignement du marteau par rapport au produit à tracer d'où il résulte une libération du dispositif de traçabilité par rapport au marteau par désencliquetage des moyens d'encliquetage. En outre, la présence des moyens d'encliquetage permet de charger aisément le dispositif de traçabilité sur le marteau depuis un chargeur à l'intérieur duquel sont empilés une pluralité de dispositifs de traçabilité.

Selon une caractéristique, la coque comprend deux trous traversants, chaque trou étant adapté pour permettre le passage d'un des brins d'une épingle destinée à assurer un maintien latéral suivant une direction transversale à une direction d'empilement d'une pluralité de dispositifs de traçabilité empilés les uns sur les autres.

Ainsi, de tels trous traversants permettent d'obtenir un empilement de dispositifs de traçabilité formant un ensemble cohérent grâce à l'épingle, ce qui permet ensuite de charger les dispositifs de traçabilité empilés et maintenus par l'épingle dans le chargeur.

Selon une caractéristique, la coque comprend : une première face à partir de laquelle les parties d'accrochage font saillie ; une deuxième face opposée à la première face, le dispositif de traçabilité comprenant, du côté de la deuxième face, au moins un dégagement permettant de loger au moins une portion d'une des parties d'accrochage d'un autre dispositif de traçabilité empilé sur ledit dispositif de traçabilité.

Ainsi, le ou chaque dégagement peut coopérer avec tout ou partie des parties d'accrochage de sorte à permettre un rapprochement des coques de différents dispositifs de traçabilité empilés dans un même empilement de dispositifs de traçabilité. Dès lors, l'empilement de dispositifs de traçabilité présente un encombrement réduit, ceci étant avantageux pour, par exemple, loger plus de dispositifs de traçabilité au sein du chargeur.

Selon une caractéristique, les parties d'accrochage sont formées chacune par un clou comprenant une tête et une pointe, la tête dudit clou étant maintenue dans la matière de la coque.

L'utilisation de clous permet une bonne pénétration de ces derniers dans le produit à tracer en vue d'y fixer le dispositif de traçabilité. Le maintien de la tête des clous dans la matière de la coque permet de faciliter la transmission d'un choc appliqué, par exemple par le marteau, sur la coque aux clous pour favoriser leur pénétration dans le produit à tracer.

Selon une caractéristique, le dispositif de traçabilité comprend une pièce de liaison, de préférence injectée ; les parties d'accrochage sont formées chacune par un clou comprenant une tête et une pointe, la tête dudit clou étant maintenue dans la pièce de liaison ; la pièce de liaison est solidaire de la matière de la coque.

La pièce de liaison permet aux clous d'être orientés convenablement par rapport à la coque, notamment lorsque la coque est obtenue par surmoulage sur la pièce de liaison.

Selon une caractéristique, la pièce de liaison comprend une matière identique à la matière de la coque.

Ainsi, cela permet notamment d'améliorer la cohésion entre la pièce de liaison et la coque, notamment lorsque la coque est obtenue par surmoulage sur la pièce de liaison.

Selon une caractéristique, la pièce de liaison peut comprendre des fibres de verre par exemple enrobées par la matière que comprend la pièce de liaison.

Ainsi, cela permet de donner plus de résistance à l'ensemble formé par la coque et la pièce de liaison.

Selon une caractéristique, le dispositif de traçabilité comprend une pièce métallique, de préférence découpée et emboutie, la pièce métallique comprenant : une première partie solidaire de la coque de sorte à assurer le maintien de la pièce métallique par rapport à la coque ; et des deuxièmes parties délimitant chacune l'une des parties d'accrochage, chaque partie d'accrochage présentant une forme ondulée.

Ainsi, la forme ondulée de chacune des parties d'accrochage permet de conférer à la partie d'accrochage correspondante une rigidité adaptée et permet d'empêcher le fléchissement de la partie d'accrochage correspondante lors de sa pénétration dans le produit à tracer.

Selon une caractéristique, chaque partie d'accrochage comprend, à une extrémité de sa forme ondulée, un cran configuré pour assurer un ancrage du dispositif de traçabilité par rapport au produit à tracer.

Ainsi, le cran, lorsque la partie d'accrochage qui le comprend a pénétré dans le produit à tracer, permet d'augmenter la force nécessaire au retrait du dispositif de traçabilité par rapport au produit à tracer sur lequel il est fixé.

Selon une caractéristique, chaque partie d'accrochage comprend une extrémité distale de la coque, l'extrémité distale comprenant une zone d'attaque présentant un profil étudié pour une insertion progressive dans le produit à tracer.

Ainsi, ce profil permet de favoriser la pénétration des parties d'accrochage dans le produit à tracer, ce qui permet de limiter l'effort nécessaire à appliquer sur le dispositif de traçabilité, notamment par le marteau, pour le fixer au produit à tracer.

D'autres avantages et caractéristiques pourront ressortir de la description détaillée qui suit.

### Description sommaire des dessins

L'invention sera mieux comprise à la lecture de la description détaillée qui suit, donnée uniquement à titre d'exemple non limitatif et faite en se référant aux dessins annexés et listés ci-dessous.
La figure 1 illustre, selon une vue schématique de dessus, un premier mode de réalisation d'un dispositif de traçabilité d'un produit en bois ou en aggloméré.
La figure 2 est une vue schématique de dispositifs de traçabilité empilés, chacun des dispositifs de traçabilité empilés étant selon le premier mode de réalisation de la figure 1 et montrés selon un plan de coupe A-A indiqué sur la figure 1.
La figure 3 est une vue schématique de dispositifs de traçabilité empilés, chacun des dispositifs de traçabilité empilés étant selon le premier mode de réalisation de la figure 1 et montrés selon un plan de coupe B-B indiqué sur la figure 1.
La figure 4 est une vue schématique en coupe d'un marqueur de radio-identification encapsulé selon un mode de réalisation particulier de l'invention.
La figure 5 illustre, selon une vue schématique de dessus, un deuxième mode de réalisation du dispositif de traçabilité.
La figure 6 est une vue schématique de dispositifs de traçabilité empilés, chacun des dispositifs de traçabilité empilés étant selon le deuxième mode de réalisation de la figure 5 et montrés selon un plan de coupe A-A indiqué sur la figure 5.
La figure 7 est une vue schématique de dessus d'une pièce de liaison du dispositif de traçabilité de la figure 5.
La figure 8 est une vue schématique de la pièce de liaison de la figure 7 selon un plan de coupe A-A indiqué en figure 7.
La figure 9 est une vue schématique de la pièce de liaison de la figure 7 selon un plan de coupe B-B indiqué en figure 7.
La figure 10 illustre, selon une vue schématique de dessus, un troisième mode de réalisation du dispositif de traçabilité.

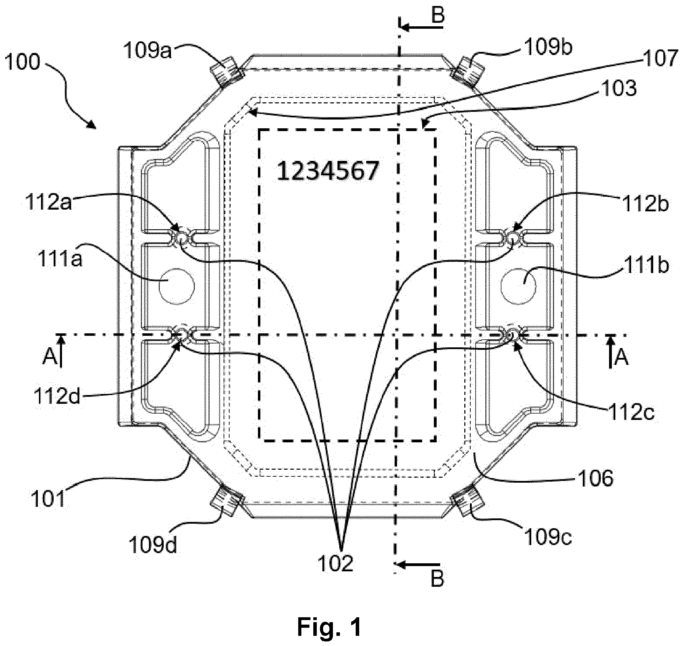

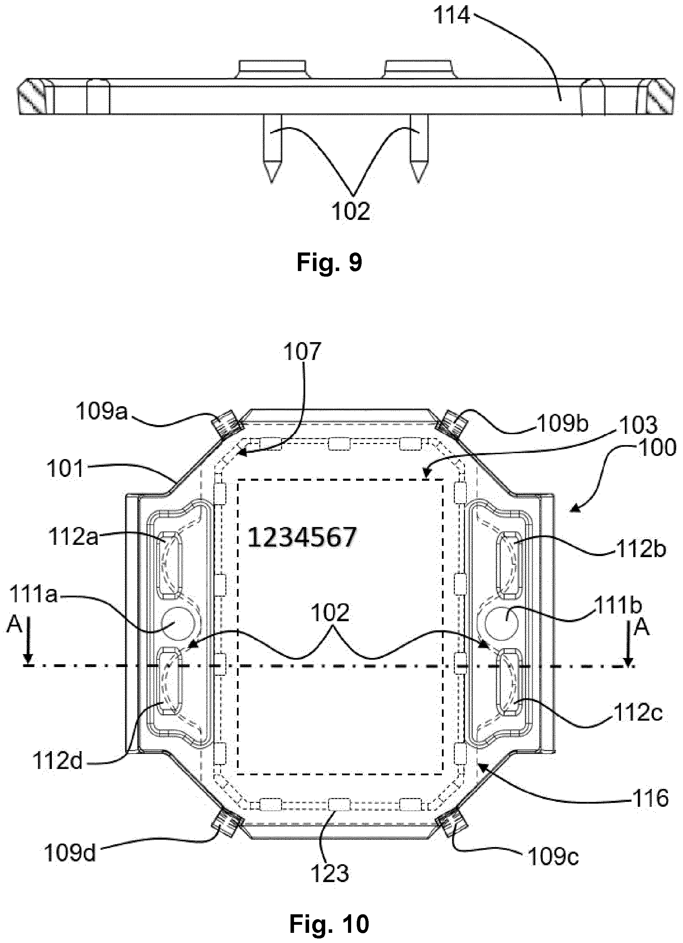

La figure 1 1 est une vue schématique de dispositifs de traçabilité empilés, chacun des dispositifs de traçabilité empilés étant selon le troisième mode de réalisation de la figure 10 et montrés selon un plan de coupe A-A indiqué sur la figure 10.

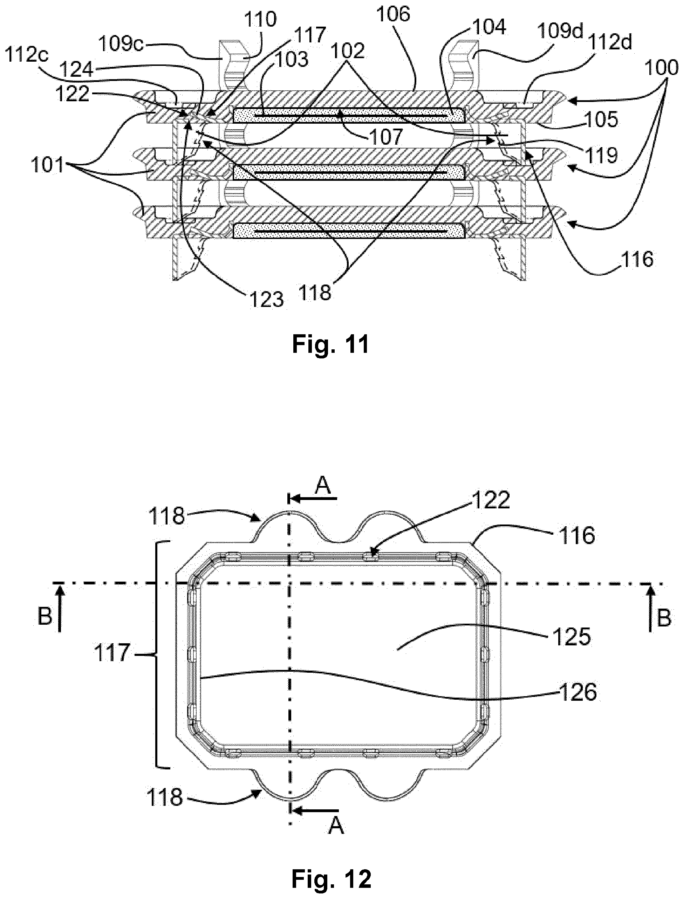

La figure 12 est une vue schématique de dessus d'une pièce métallique du dispositif de traçabilité de la figure 10.

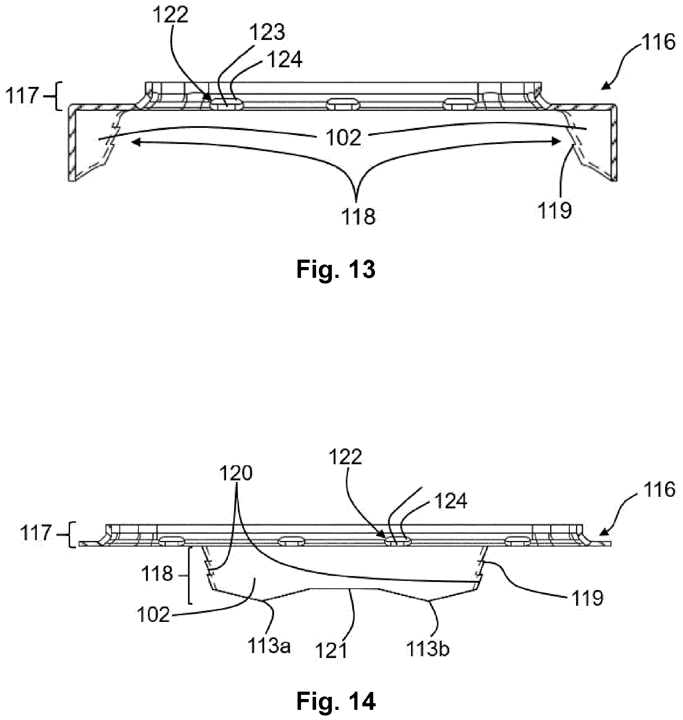

La figure 13 est une vue schématique de la pièce métallique de la figure 12 selon un plan de coupe A-A indiqué sur la figure 12.
La figure 14 est une vue schématique de la pièce métallique de la figure 12 selon un plan de coupe B-B indiqué sur la figure 12.

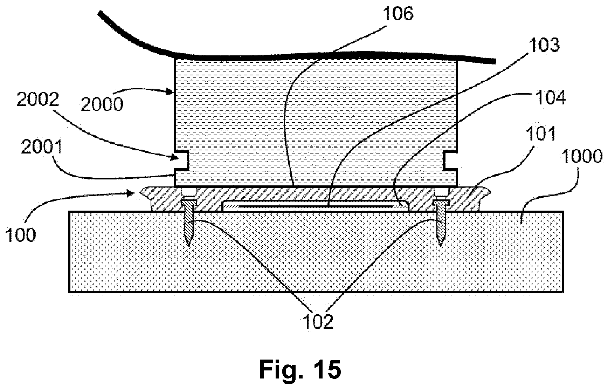

La figure 15 est une vue schématique en coupe montrant la pose du dispositif de traçabilité de la figure 1, alors montré selon le plan de coupe A-A indiqué sur la figure 1, sur un produit à tracer à l'aide d'un marteau.

Sur ces figures, les mêmes références sont utilisées pour désigner les mêmes éléments, le cas échéant selon leur fonction. Les éléments représentés sur les différentes figures ne sont pas nécessairement réalisés à l'échelle afin de faciliter la compréhension des figures.

### Description détaillée

Par « compris entre deux valeurs », il est entendu dans la présente description que ces deux valeurs forment les bornes d'une plage correspondante pour laquelle les deux valeurs sont incluses.

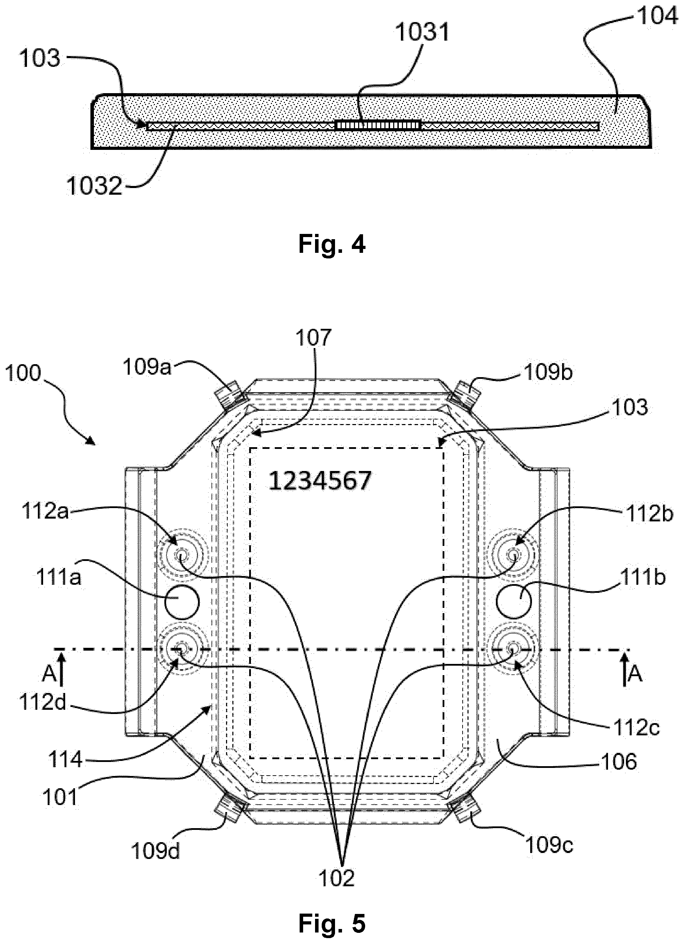

L'invention concerne un dispositif 100 de traçabilité d'un produit 1000 en bois ou en aggloméré, ce dispositif 100 de traçabilité comprend une coque 101, par exemple de forme générale octogonale, en une matière plastique rigide et des parties 102 d'accrochage, par exemple en métal, pour assurer une fixation du dispositif 100 de traçabilité sur le produit 1000 à tracer par pénétration des parties 102 d'accrochage en force dans le produit 1000 à tracer. Les parties 102 d'accrochage sont formées en un matériau présentant une résistance mécanique strictement supérieure à la résistance mécanique de la matière de la coque 101. Différents exemples de modes de réalisation de ce dispositif 100 de traçabilité sont illustrées en figures 1 à 3 pour un premier mode de réalisation, en figures 5 à 9 pour un deuxième mode de réalisation et en figures 10 à 14 pour un troisième mode de réalisation.

Par « rigide » en parlant de la coque 101, il est notamment entendu que celle-ci résiste/s'oppose à la déformation, en particulier lorsqu'elle est soumise à un ou des chocs appliqués à la coque 101 pour faire pénétrer les parties 102 d'accrochage dans le produit 1000 à tracer.

Le produit 1000 à tracer, lorsqu'il s'agit d'un produit en bois, peut être une grume.

Ce dispositif 100 de traçabilité permet de conférer une haute résistance mécanique aux parties 102 d'accrochage par rapport à la résistance mécanique de la coque 101 pour assurer une fixation du dispositif 100 de traçabilité sur le produit 1000 à tracer par pénétration des parties 102 d'accrochage en force dans le produit 1000 à tracer, par exemple à l'aide d'un marteau 2000 de pose destiné à être utilisé pour fixer le dispositif 100 de traçabilité sur le produit 1000 à tracer comme peut le montrer la figure 15.Notamment, le marteau 2000 permet de produire un ou des chocs sur le dispositif 100 de traçabilité pour permettre la pénétration évoquée ci-avant. Bien que la figure 15 soit illustrée en lien avec le premier mode de réalisation, l'homme du métier peut appliquer les mêmes principes pour le deuxième mode de réalisation et le troisième mode de réalisation.

Les parties 102 d'accrochage sont solidaires de la coque 101, ceci permettant de maintenir la coque 101 par rapport au produit 1000 à tracer pénétré par les parties 102 d'accrochage lorsque le dispositif 100 de traçabilité est en place. En outre, cela permet aussi qu'un ou plusieurs efforts appliqués à la coque 101, par exemple via un ou des chocs, permettent la pénétration des parties 102 d'accrochage dans le produit 1000 à tracer, ces parties 102 d'accrochage subissant alors chacune une contrainte en pénétrant dans le produit 1000 à tracer.

La matière de la coque 101 peut être du polycarbonate par exemple injecté, ce qui permet de conférer à la coque 101 une rigidité satisfaisante et une bonne résistance au(x) choc(s).

Dans le but d'assurer une traçabilité du produit 1000 à tracer, le dispositif 100 de traçabilité comprend un marqueur 103 de radio-identification. Par ailleurs, le dispositif 100 de traçabilité comprend aussi une masse 104 en élastomère assurant une protection spatiale omnidirectionnelle du marqueur 103 de radio-identification, la masse 104 en élastomère étant solidaire de la coque 101. La masse 104 en élastomère a notamment pour rôle de protéger le marqueur 103 de radio-identification dans toutes les directions. En fait, la masse 104 en élastomère peut être fixée par une liaison chimique entre l'élastomère et la coque 101, cette liaison chimique étant notamment un collage résultant d'une solidification de l'élastomère de la masse 104 au contact de la coque 101.

Le marqueur 103 de radio-identification peut être un marqueur de type RFID, par exemple aussi connu sous la terminologie « radio-étiquette ». Classiquement le marqueur 103 de radio-identification, dont un exemple est illustré schématiquement en figure 4, peut comprendre une puce 1031 électronique et une antenne 1032 connectée à la puce 1031 électronique. La puce 1031 électronique peut alors comprendre un ou des renseignements stockés dans une mémoire de la puce 1031 électronique dont la lecture peut être faite à distance à l'aide d'un lecteur de radio-identification via l'antenne 1032. Par exemple, dans le cas où le produit 1000 à tracer est une grume les renseignements peuvent comprendre un identifiant, la localisation d'une parcelle de forêt où a été extrait la grume et une date d'abattage de l'arbre dont est issue la grume.

La masse 104 en élastomère permet de protéger le marqueur 103 de radio-identification des chocs, et notamment de l'humidité : ceci permettant de préserver l'électronique de la puce 1031 électronique. L'élastomère présente une certaine souplesse qui permet de protéger le marqueur 103 de radio-identification lorsque le dispositif 100 de traçabilité reçoit un choc en vue de permettre la pénétration de ses parties 102 d'accrochage dans le produit 1000 à tracer.

Par exemple, l'élastomère de la masse 104 en élastomère est du polyuréthane. L'avantage du polyuréthane est qu'il est tout particulièrement compatible pour assurer la liaison chimique adaptée à la fixation de la masse 104 en élastomère à la coque 101, notamment lorsque la coque 101 est en polycarbonate. Ceci permet aussi de former une liaison souple-rigide entre la coque 101 et le marqueur 103 de radio-identification ; ce qui participe à sa protection mécanique.

Notamment, la masse 104 encapsule complètement le marqueur 103 de radio-identification pour le protéger de manière adaptée.

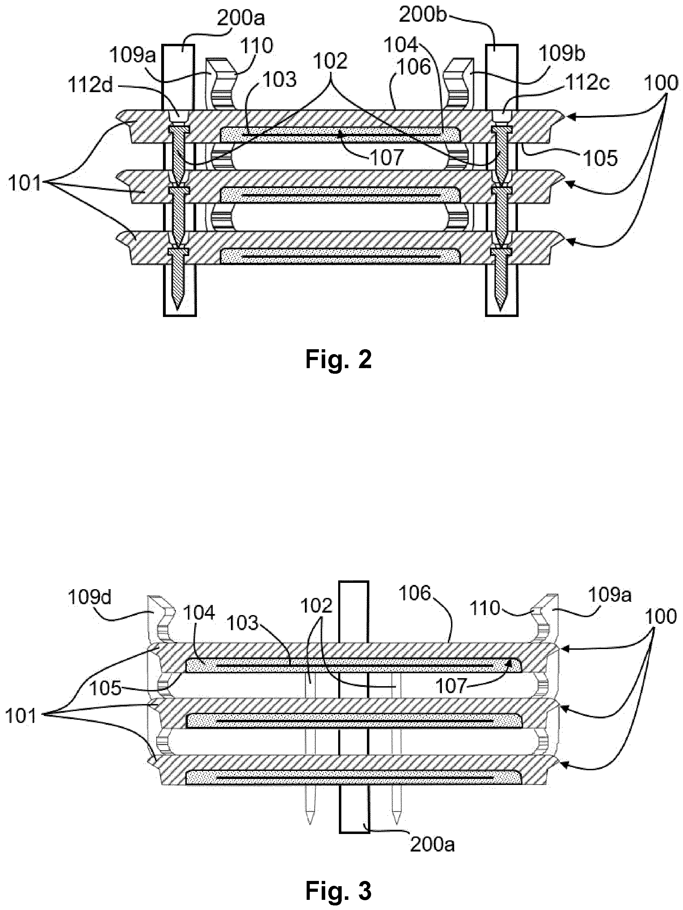

Comme le montre par exemple la figure 4, la masse 104 en élastomère encapsule le marqueur 103 de radio-identification, notamment sur deux de ses faces opposées, dans un logement 107 de la coque 101 (visible en figures 2, 3, 6 et 11, et en pointillé en figures 1, 5 et 10). Ainsi, la masse 104 en élastomère peut être insérée dans le logement 107.

La coque 101 peut comprendre une première face 105 et une deuxième face 106 opposée à la première face 105. Les parties 102 d'accrochage font saillie de la première face 105.

Notamment, la coque 101 peut présenter entre sa première face 105 et sa deuxième face 106 une épaisseur comprise entre 3 mm et 3,5 mm et peut présenter des dimensions, orthogonalement à la direction de mesure de son épaisseur de sorte à être incluse dans un carré de côté compris entre 40 mm et 45 mm, notamment dans le but d'être compatible avec des marteaux 2000 existants.

Les parties 102 d'accrochage peuvent s'étendre au-delà de la coque 101 d'une distance comprise entre 4 mm et 4,5 mm

La coque 101 peut comprendre le logement 107 délimité dans la première face 105. Ainsi, le marqueur 103 de radio-identification peut être avantageusement agencé dans ce logement 107 tout comme tout ou partie de la masse 104 en élastomère. Dès lors, la coque 101 peut participer à la protection mécanique du marqueur 103 de radio-identification. Ce logement 107 peut présenter une profondeur comprise entre 1,2 mm et 1,8 mm. A titre d'exemple, le logement 107 peut être défini comme un volume de 35 mm de long par 23 mm de large et par 1,5 mm de profond délimitant un creux dans la coque 101.

Les parties 102 d'accrochage peuvent être agencées autour du logement pour éviter de faire écran s'opposant à la lecture du marqueur 103 de radio-identification ; ceci étant notamment justifié lorsque ces parties 102 d'accrochage sont en métal.

Par exemple, le dispositif 100 de traçabilité peut être fixé au produit 1000 à tracer à l'aide du marteau 2000 (figure 15). Le marteau 2000 peut présenter une tête 2001 venant alors en appui contre la deuxième face 106 pour permettre l'enfoncement des parties 102 d'accrochage dans le produit 1000 à tracer.

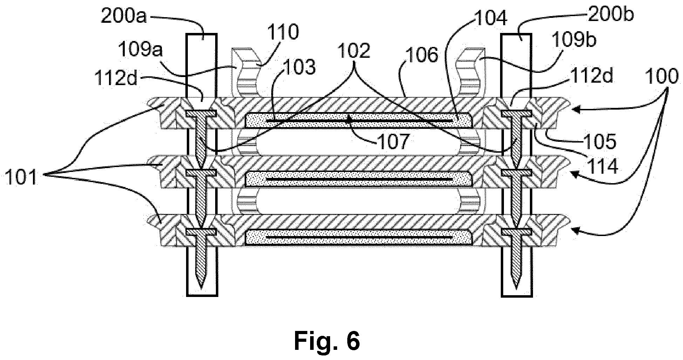

Par exemple, des dispositifs 100 de traçabilité peuvent être empilés comme le montrent par exemple les figures 2, 3, 6 et 11 où, à titre d'exemple non limitatif, trois dispositifs 100 de traçabilité sont empilés. Un tel empilement de dispositifs 100 de traçabilité peut être contenu dans un chargeur (non représenté) dont la fonction est de distribuer un à un les dispositifs 100 de traçabilité, par exemple à destination du marteau 2000. En figures 2 et 3, les dispositifs 100 de traçabilité empilés sont identiques et sont selon le premier mode de réalisation. En figure 6, les dispositifs 100 de traçabilité empilés sont identiques et sont selon le deuxième mode de réalisation. En figure 11, les dispositifs 100 de traçabilité empilés sont identiques et sont selon le troisième mode de réalisation.

Le dispositif 100 de traçabilité peut comprendre, comme à titre d'exemple visibles en figures 1, 2, 3, 5, 6, 10 et 11, des moyens d'encliquetage incluant des doigts 109a, 109b, 109c, 109d aptes à se positionner dans une gorge 2002 (figure 15) du marteau 2000, cette gorge 2002 étant par exemple ménagée dans la tête 2001 du marteau 2000. Ainsi, les doigts 109a, 109b, 109c, 109d peuvent être prévus pour coopérer avec le marteau 2000 par encliquetage dans la gorge 2002, pour permettre le retrait d'un des dispositifs 100 de traçabilité du chargeur à l'intérieur duquel lesdits dispositifs 100 de traçabilité sont empilés.

En fait, les doigts 109a, 109b, 109c, 109d peuvent s'étendre depuis, ou plus généralement du côté de, la deuxième face 106 alors destinée à coopérer avec le marteau 2000. Dans ce cas, la gorge 2002 autorise l'insertion d'une extrémité 110 de chacun des doigts 109a, 109b, 109c, 109d par exemple formée par une protubérance d'où il résulte un maintien adapté du dispositif 100 de traçabilité par rapport au marteau 2000 en vue de faciliter la pénétration des parties 102 d'accrochage dans le produit 1000 à tracer. Ainsi, lors de la pose du dispositif 100 de traçabilité, la coque 101 peut être solidaire du marteau 2000 par l'intermédiaire des doigts 109a, 109b, 109c, 109d (par exemple au nombre de quatre) encliquetés sur le marteau 2000. Un opérateur manoeuvrant le marteau 2000 peut alors effectuer un seul mouvement pour poser le dispositif 100 de traçabilité sur le produit 1000 à tracer. Lors de la manoeuvre du marteau 2000, la coque 101 subit une contrainte relative du fait de son appui sur une face de la tête 2001 du marteau 2000 et les parties 102 d'accrochage subissent chacune une contrainte en pénétrant dans le produit 1000 à tracer en fin de mouvement du marteau 2000.

Une épingle comprenant deux brins 200a, 200b peut être utilisée pour empiler des dispositifs 100 de traçabilité. La coque 101 peut comprendre deux trous 111a, 111b traversants, chaque trou 111a, 111b traversant étant adapté pour permettre le passage d'un des brins 200a, 200b de l'épingle destinée à assurer un maintien latéral suivant une direction transversale à une direction d'empilement d'une pluralité de dispositifs 100 de traçabilité empilés les uns sur les autres. Autrement dit, le maintien latéral est celui de l'empilement des dispositifs 100 de traçabilité. Ces trous 111a, 111b peuvent être agencés au niveau de deux côtés opposés de la coque 101 et peuvent relier chacun la première face 105 de la coque 101 à la deuxième face 106 de la coque 101. En fait, dans le cadre de l'empilement des dispositifs 100 de traçabilité, l'un des brins 200a peut passer par l'un des trous 111a, 111b de plusieurs dispositifs 100 de traçabilité empilés et l'autre des brins 200b peut passer par l'autre des trous 111a, 111b de ces plusieurs dispositifs 100 de traçabilité empilés. En particulier, l'épingle est indépendante du chargeur dans lequel elle peut pénétrer avec son chargement de dispositifs 100 de traçabilité empilés, par exemple au nombre de quarante. Ces trous 111a, 111b traversants peuvent être présents dans les premier, deuxième et troisième modes de réalisation.

Le dispositif 100 de traçabilité peut comprendre, du côté de la deuxième face 106, au moins un dégagement 112a, 112b, 112c, 112d permettant de loger au moins une portion d'une des parties 102 d'accrochage d'un autre dispositif de traçabilité empilé sur ledit dispositif 100 de traçabilité, ceci pouvant être applicable à tous les modes de réalisation. Ainsi, il est possible de limiter l'encombrement de l'empilement de dispositifs de traçabilité. A cet effet, la deuxième face 106 peut délimiter au moins un dégagement 112a, 112b, 112c, 112d agencé dans l'alignement d'au moins une des parties 102 d'accrochage.

Le ou chaque dégagement 112a, 112b, 112c, 112d peut présenter une profondeur comprise entre 1,5 mm et 2 mm, ce qui peut conduire dans le cadre de l'empilement des dispositifs 100 de traçabilité à ce que le pas d'empilement soit compris entre 5 mm et 6 mm.

En particulier, dans le cadre de l'empilement de dispositifs 100 de traçabilité, tout dispositif 100 de traçabilité empilé sur un autre dispositif 100 de traçabilité repose, via ses parties 102 d'accrochage sur cet autre dispositif 100 de traçabilité, notamment au niveau de fonds des dégagements 112a, 112b, 112c, 112d.

Ledit au moins un, et notamment chaque, dégagement 112a, 112b, 112c, 112d peut être délimité par la coque 101 comme par exemple illustré pour le premier mode de réalisation et pour le troisième mode de réalisation. Ledit au moins un, et notamment chaque, dégagement peut être délimité par une pièce 114 de liaison solidaire de la coque 101, cette pièce de liaison 114, telle qu'illustrée dans le cadre du deuxième mode de réalisation, sera décrite plus en détails ci-après.

Le dispositif 100 de traçabilité (notamment sa coque 101 ou sa pièce 114 de liaison) peut comprendre autant de dégagements 112a, 112b, 112c, 112d qu'il comprend de parties 102 d'accrochage, comme cela est le cas notamment pour le premier mode de réalisation et pour le deuxième mode de réalisation où chaque dégagement 112a, 112b, 112c, 112d du dispositif 100 de traçabilité est adapté pour recevoir une portion d'une seule des parties 102 d'accrochage d'un autre dispositif de traçabilité superposé audit dispositif 100 de traçabilité.

Les parties 102 d'accrochage peuvent être formées chacune par un clou, par exemple en métal, comprenant une tête et une pointe comme le montrent le premier mode de réalisation et le deuxième mode de réalisation. Bien que les figures 1 et 5 montrent la présence de quatre clous, ce nombre n'est pas limitatif et peut être adapté au besoin.

Chaque partie 102 d'accrochage peut aussi comprendre localement deux pointes 113a, 113b comme le montre par exemple le troisième mode de réalisation où chaque pointe 113a, 113b d'un dispositif 100 de traçabilité empilé sur un autre dispositif de traçabilité peut alors reposer sur un fond d'un des dégagement 112a, 112b, 112c, 112d correspondant dudit autre dispositif 100 de traçabilité.

Dans le cas où les parties 102 d'accrochage sont des clous, les pointes des clous d'un dispositif 100 de traçabilité empilé sur un autre dispositif de traçabilité peuvent alors chacune reposer sur une tête de clou dudit autre dispositif 100 de traçabilité agencée à une extrémité du dégagement correspondant dudit autre dispositif 100 de traçabilité. Ceci permettant d'optimiser l'encombrement vertical de dispositifs 100 de traçabilité empilés.

Par exemple, les parties 102 d'accrochage étant formées chacune par un clou comprenant une tête et une pointe, la tête dudit clou peut être maintenue dans la matière de la coque 101. C'est en particulier ce qui est représenté pour le premier mode de réalisation.

La coque 101 peut être surmoulée sur les parties 102 d'accrochage, par exemple sur les têtes des clous (voir par exemple la figure 2), de sorte à maintenir lesdites parties 102 d'accrochage par rapport à la coque 101.

Par exemple, selon une autre réalisation pour laquelle les parties 102 d'accrochage sont formées chacune par un clou comprenant une tête et une pointe, le dispositif 100 de traçabilité comprend la pièce 114 de liaison (visible en pointillé en figure 4), par exemple injectée, la tête dudit clou étant maintenue dans la pièce 114 de liaison et en particulier dans une matière de la pièce 114 de liaison par exemple injectée pour obtenir la pièce 114 de liaison injectée. Ainsi, la pièce 114 de liaison peut être surmoulée sur les têtes des clous de sorte que les clous sont tous maintenus à la même pièce 114 de liaison. La pièce 114 de liaison est solidaire de la matière de la coque 101, ceci permettant qu'un effort appliqué sur la coque 101, notamment sur sa deuxième face 106, soit transmis aux clous pour leur permettre de pénétrer dans le produit 1000 à tracer. Cette autre réalisation est notamment celle illustrée aux figures représentant le deuxième mode de réalisation.

En particulier, la coque 101 est surmoulée sur la pièce 114 de liaison de sorte à réaliser la solidarisation de la pièce 114 à la coque 101 et donc à la matière de la coque 101.

La matière que comprend la pièce 114 de liaison peut être identique à la matière de la coque 101. Ceci permet une compatibilité chimique assurant une cohésion adaptée de la matière de la coque 101 sur la matière que comprend la pièce 114 de liaison, en particulier lors du surmoulage de la coque 101 sur la pièce 114 de liaison.

La matière que comprend la pièce 114 de liaison peut bien entendu être différente de celle de la coque 101 du moment qu'elle permet d'assurer la fonction de la pièce 114 de liaison à savoir notamment maintenir les clous entre eux et les fixer de manière adaptée par rapport à la coque 101 notamment par un surmoulage de la coque 101 sur la pièce 114 de liaison.

La pièce 114 de liaison peut comprendre des fibres de verre par exemple enrobées par la matière que comprend la pièce 114 de liaison pour augmenter la résistance mécanique de l'ensemble formé par la pièce 114 de liaison et la coque 101. Par exemple, la matière que comprend la pièce 114 de liaison peut être du polycarbonate.

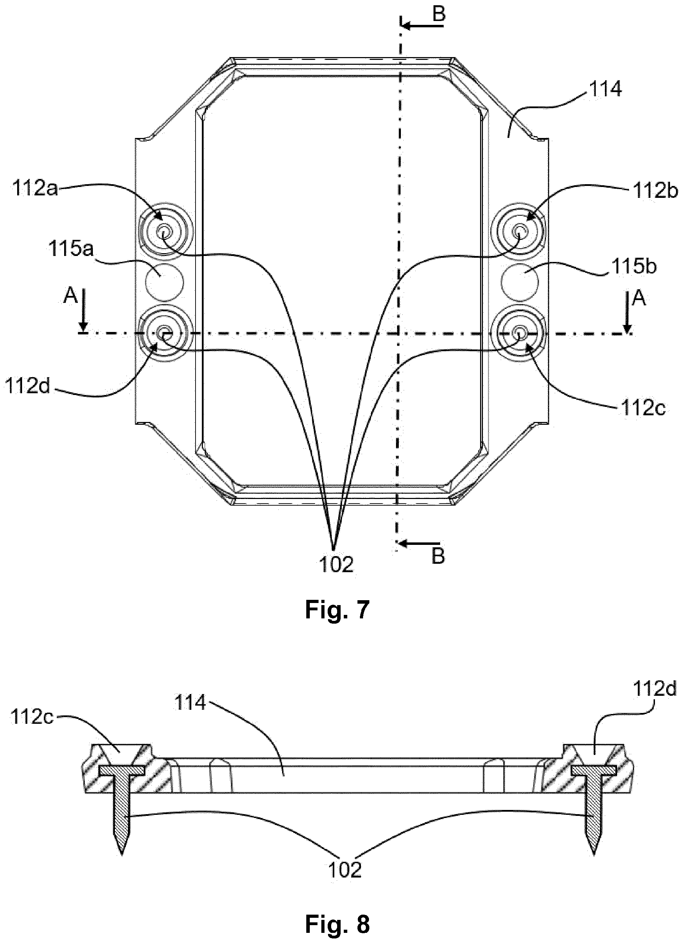

Dans le cas où la coque 101 comprend des trous 111a, 111b traversants, la pièce 114 de liaison peut aussi comprendre des trous 115a, 115b traversants, comme le montre la figure 7, de sorte que chacun des trous traversants 115a, 115b de la pièce 114 de liaison soit entouré par la paroi d'un seul des trous 111a, 111b traversants de la coque 101 ; dans ce cas la paroi de ce trou 111a, 111b traversant de la coque 101 est en contact avec de la matière de la pièce 114 de liaison. Ceci permettant, le cas échéant, aux brins 200a, 200b de l'épingle de traverser chacun le dispositif 100 de traçabilité en passant par l'un des trous 115a, 115b traversants de la pièce 114 de liaison et, par conséquent, par l'un des trous 111a, 111b traversants de la coque 101, chacun de ces trous 111a, 111b, 115a, 115b traversants n'étant traversé que par un seul des brins 200a, 200b de l'épingle.

Selon une réalisation particulière, dont un exemple peut être visible sur les figures montrant le troisième mode de réalisation, le dispositif 100 de traçabilité comprend une pièce 116 métallique (schématisée en pointillé en figure 10), de préférence découpée et emboutie. La pièce 116 métallique comprend :
- une première partie 117, adoptant par exemple la forme d'un cadre, solidaire de la coque 101 de sorte à assurer le maintien de la pièce 116 métallique par rapport à la coque 101 ; et
- des deuxièmes parties 118 délimitant chacune l'une des parties 102 d'accrochage, chaque partie 102 d'accrochage présentant une forme ondulée.
Cette forme ondulée permet une meilleure résistance des parties 102 d'accrochage lors de la pénétration dans le produit 1000 à tracer.

La pièce 116 métallique peut être en acier.

La pièce 116 métallique présenter une épaisseur comprise entre 0,3 mm et 0,5 mm, notamment obtenue par découpe et emboutissage d'une tôle, par exemple en acier, présentant cette même épaisseur.

Chaque partie 102 d'accrochage présentant une forme ondulée peut comprendre, à une extrémité de sa forme ondulée, un cran 119 configuré pour assurer un ancrage du dispositif 100 de traçabilité par rapport au produit 1000 à tracer. Ceci est notamment visible en figures 11, 13 et 14.

En particulier, chaque partie 102 d'accrochage présentant une forme ondulée peut présenter une extrémité libre comprenant deux bords 120 latéraux, ces bords 120 latéraux étant reliés par un bord 121 d'attaque agencé à l'opposé de la première partie 117 et donc notamment à l'opposé de la coque 101. Chaque bord 120 latéral peut relier la première partie 117 au bord 121 d'attaque. Chacun des deux bords 120 latéraux peut comprendre plusieurs crans 119 par exemple au nombre de deux comme le montrent les figures 11, 13 et 14 et agencés pour s'opposer au retrait du dispositif 100 de traçabilité par rapport au produit 1000 à tracer selon une direction opposée à la direction de pénétration des parties 102 d'accrochage dans le produit 1000 à tracer. Ainsi, le bord 121 d'attaque peut être considéré comme une partie spécifiquement étudiée pour favoriser la pénétration de la partie 102 d'accrochage qui le comprend dans le produit 1000 à tracer.

La pièce 119 métallique peut comprendre des moyens 122 pour augmenter la cohésion entre la coque 101 et la pièce 116 métallique, ces moyens 122 pour augmenter la cohésion entre la coque 101 et la pièce 116 métallique peuvent comprendre des orifices 123 et des languettes 124, chaque orifice 123 ayant été obtenu par découpe locale et emboutissage de sorte à former l'une des languettes 124 alors associée audit orifice 123, ladite une des languettes 124 forme alors localement un bord dudit orifice et s'étend dans la coque 101 en direction de la deuxième face 106 de la coque 101. De préférence, les orifices 123 de la pièce 116 métallique sont comblés en tout ou partie par de la matière de la coque 101 et les languettes 124 sont enrobées par de la matière de la coque 101 d'où il résulte que la coque 101 et la pièce 116 métallique se comportent comme un corps monobloc. Notamment, la première partie 117 comprend les moyens 122 pour augmenter la cohésion entre la coque 101. Par exemple, la première partie 117 comprend une ouverture 125 centrale délimitant un bord 126 interne de la première partie 117 et les orifices 123 sont répartis le long du bord 126 interne, par exemple au nombre non limitatif de quatorze comme illustré en figures 10 et 12.

Par exemple, chaque partie 102 d'accrochage présentant une forme ondulée peut être maintenue par rapport à la coque 101 par le fait que la coque 101 est surmoulée sur ladite partie 102 d'accrochage présentant une forme ondulée.

Les parties 102 d'accrochage sont représentées au nombre de deux dans le troisième mode de réalisation, ce nombre n'étant pas limitatif et pouvant être adapté au besoin.

De préférence et de manière pouvant être appliquée aux premier, deuxième et troisième mode de réalisation, chaque partie 102 d'accrochage comprend une extrémité distale de la coque 101, l'extrémité distale comprenant une zone d'attaque présentant un profil étudié pour une insertion progressive dans le produit à tracer.

Ainsi, lorsque les parties 102 d'accrochage sont des clous, l'extrémité distale de chacun des clous correspond à une pointe agencée à l'opposé de sa tête.

Ainsi, lorsque les parties 102 d'accrochage présente chacune une forme ondulée, l'extrémité distale peut correspondre au bord 121 d'attaque évoqué ci-avant dont le profil peut délimiter localement deux dents présentant chacune l'une des pointes 113a, 113b et évoquant notamment la forme générale d'un W.

De manière générale, outre le marqueur 103 de radio-identification, le dispositif de traçabilité peut présenter un ou plusieurs marqueurs visuels, comme par exemple une couleur et/ou un ou plusieurs numéros pouvant être inscrit, notamment au laser, sur la deuxième face 106 de la coque 101 comme le montrent par exemple les figures 1, 5 et 10 avec l'inscription « 1234567 », le ou chaque numéro permettant d'identifier ou de de participer à l'identification du produit 1000 à tracer.

La présente invention trouve une application industrielle dans le domaine du marquage de produits à tracer en bois ou en aggloméré, notamment dans la filière du bois.

## Revendications

1. Dispositif (100) de traçabilité d'un produit (1000) en bois ou en aggloméré, le dispositif (100) de traçabilité comprenant :
• un marqueur (103) de radio-identification ;
• une coque (101) en une matière plastique rigide ;
• une masse (104) en élastomère assurant une protection spatiale omnidirectionnelle du marqueur (103) de radio-identification, la masse (104) en élastomère étant solidaire de la coque (101) ;
• des parties (102) d'accrochage pour assurer une fixation du dispositif (100) de traçabilité sur le produit (1000) à tracer par pénétration des parties (102) d'accrochage en force dans le produit (1000) à tracer, les parties (102) d'accrochage étant solidaires de la coque (101), les parties (102) d'accrochage étant formées en un matériau présentant une résistance mécanique strictement supérieure à la résistance mécanique de la matière de la coque (101).

2. Dispositif (100) de traçabilité selon la revendication 1, **caractérisé en ce qu'**il comprend des moyens d'encliquetage incluant des doigts (109) aptes à se positionner dans une gorge d'un marteau (2000) de pose destiné à être utilisé pour fixer le dispositif (100) de traçabilité sur le produit (1000) à tracer.

3. Dispositif (100) de traçabilité selon l'une quelconque des revendications 1 à 2, **caractérisé en ce que** la coque (101) comprend deux trous (111a, 111b) traversants, chaque trou (111a, 111b) étant adapté pour permettre le passage d'un des brins (200a, 200b) d'une épingle destinée à assurer un maintien latéral suivant une direction transversale à une direction d'empilement d'une pluralité de dispositifs de traçabilité empilés les uns sur les autres.

4. Dispositif (100) de traçabilité selon l'une quelconque des revendications 1 à 3, **caractérisé en ce que** la coque (101) comprend :
• une première face (105) à partir de laquelle les parties (102) d'accrochage font saillie ;
• une deuxième face (106) opposée à la première face (105), le dispositif (100) de traçabilité comprenant, du côté de la deuxième face (106), au moins un dégagement (112a, 112b, 112c, 112d) permettant de loger au moins une portion d'une des parties (102) d'accrochage d'un autre dispositif de traçabilité empilé sur ledit dispositif (100) de traçabilité.

5. Dispositif (100) de traçabilité selon l'une quelconque des revendications 1 à 4, **caractérisé en ce que** les parties (102) d'accrochage sont formées chacune par un clou comprenant une tête et une pointe, la tête dudit clou étant maintenue dans la matière de la coque (101).

6. Dispositif (100) de traçabilité selon l'une quelconque des revendications 1 à 4, **caractérisé en ce que** :
• le dispositif (100) de traçabilité comprend une pièce (114) de liaison injectée ;
• les parties (102) d'accrochage sont formées chacune par un clou comprenant une tête et une pointe, la tête dudit clou étant maintenue dans la pièce (114) de liaison ;
la pièce (114) de liaison étant solidaire de la matière de la coque (101).

7. Dispositif (100) de traçabilité selon la revendication 6, **caractérisé en ce que** la pièce (114) de liaison comprend une matière identique à la matière de la coque (101).

8. Dispositif (100) de traçabilité selon l'une quelconque des revendications 1 à 4, **caractérisé en ce qu'**il comprend une pièce (116) métallique, découpée et emboutie, la pièce (116) métallique comprenant :
• une première partie (117) solidaire de la coque (101) de sorte à assurer le maintien de la pièce (116) métallique par rapport à la coque (101) ; et
• des deuxièmes parties (118) délimitant chacune l'une des parties (102) d'accrochage, chaque partie (102) d'accrochage présentant une forme ondulée.

9. Dispositif (100) de traçabilité selon la revendication 8, **caractérisé en ce que** chaque partie (102) d'accrochage comprend, à une extrémité de sa forme ondulée, un cran (119) configuré pour assurer un ancrage du dispositif (100) de traçabilité par rapport au produit (1000) à tracer.

10. Dispositif (100) de traçabilité selon l'une quelconque des revendications 1 à 9, **caractérisé en ce que** chaque partie (102) d'accrochage comprend une extrémité distale de la coque (101), l'extrémité distale comprenant une zone d'attaque présentant un profil étudié pour une insertion progressive dans le produit (1000) à tracer.
